# FASCICULE DE BREVET EUROPEEN

(11) **EP 2 359 188 B1**
(45) Date de publication et mention de la délivrance du brevet: **21.01.2015**
(21) Numéro de dépôt: 09760546.3
(22) Date de dépôt: 28.10.2009
(51) Int. Cl.: G03B 42/04, H05G 1/24, H05G 1/42

(54) **DISPOSITIF D'ACQUISITION D'IMAGES MULTIFONCTION**
MULTIFUNKTIONS-BILDERFASSUNGSEINRICHTUNG
MULTIFUNCTIONAL IMAGE ACQUISITION DEVICE

(30) Priorité: 25.11.2008 FR 0858011
(43) Date de publication de la demande: 24.08.2011
(73) Titulaire: Sopro, 13705 La Ciotat Cedex (FR)
(72) Inventeur: MAZUIR, Alain, F-83470 Saint Maximin La Sainte Beaume (FR); GUILHAUMON, Laurent, F-83500 La Seyne Sur Mer (FR)
(74) Mandataire: Domange, Maxime
(86) Numéro de dépôt international: PCT/FR2009/052080
(87) Numéro de publication internationale: WO 2010/061086

(56) Documents cités:
- EP-A1- 0 817 472
- EP-A1- 1 537 826
- EP-A2- 0 429 977
- WO-A-03/032839
- DE-A1- 4 235 527
- US-A- 5 331 166
- US-A- 5 510 623
- US-A- 6 002 742
- US-B1- 7 006 600

## Description

### Arrière-plan de l'invention

La présente invention se rapporte au domaine général des capteurs d'acquisition d'images et de la commande de tels capteurs.

Plus précisément, l'invention concerne un dispositif d'acquisition d'images permettant d'obtenir une image radiologique dentaire, comprenant un capteur matriciel et un module de commande de ce capteur. L'invention s'intéresse aux dispositifs dans lesquels le capteur matriciel comprend une pluralité de photodiodes, dites d'acquisition d'images, sensibles à une irradiation, et au moins une photodiode dite de détection, également sensible à l'irradiation.

De tels capteurs existent, notamment en technologie CMOS qui autorise facilement l'intégration de photodiodes de caractéristiques géométriques différentes sur un même substrat. Il est en effet utile que la ou les photodiodes de détection présentent par exemple une taille différente de celle des photodiodes d'acquisition afin d'offrir une sensibilité plus élevée permettant la détection rapide d'un rayonnement.

Le dispositif selon l'invention comprend en outre un module de commande du capteur matriciel, apte à lire périodiquement la photodiode de détection et à basculer le capteur entre au moins deux modes : un mode d'attente dans lequel les photodiodes d'acquisition sont inhibées et un mode d'acquisition dans lequel l'énergie reçue par les photodiodes d'acquisition est utilisée pour l'acquisition d'une image.

Le terme « inhibition » s'entend comme signifiant que l'on ne charge pas les photons éventuellement reçus que ce soit par purge périodique des photodiodes d'acquisition ou par blocage de la réception des photons sur les photodiodes d'acquisition.

Dans les dispositifs connus, le basculement est déclenché dès lors que la photodiode de détection détecte une irradiation par un générateur. Généralement, la réception d'une quantité de lumière prédéterminée signifie la détection de l'irradiation.

Les réalisations existantes permettent donc de déclencher l'acquisition d'image dès lors que la photodiode a reçu une quantité d'énergie donnée pendant la durée entre deux lectures de la photodiode de détection.

Avec les dispositifs connus, l'acquisition de l'image est généralement faite pendant toute la durée de l'irradiation ou durant une durée prédéterminée indépendamment de la quantité d'énergie qui est effectivement envoyée vers le capteur.

EP 0429977 A2 décrit un dispositif d'acquisition d'image à l'aide de photodiodes.

### Objet et résumé de l'invention

La présente invention a donc pour but principal de compléter les fonctions des dispositifs d'acquisition d'image par moyen d'un dispositif d'acquisition d'image selon la revendication indépendante 1, permettant d'obtenir une image radiologique dentaire selon la partie introductive de ladite revendication, en proposant qu'un tel dispositif soit tel que la photodiode de détection est apte à fournir au module de commande, y compris pendant l'irradiation et l'acquisition d'image par les photodiodes d'acquisition, un signal de sortie périodique de valeur représentative de l'énergie instantanée reçue et en ce que le module de commande utilise ce signal de sortie périodique pour analyser l'énergie reçue pendant l'acquisition.

Un tel capteur matriciel intégré permet de réaliser un suivi de l'énergie reçue par le capteur pendant l'acquisition de l'image puisque la diode est apte à fournir, y compris pendant l'acquisition, un signal représentatif de l'énergie reçue et donc quantitatif. On parlera, dans la suite, de signal quantifiant ou quantificateur.

Avec un tel dispositif d'acquisition d'images, le module de commande est en connaissance de la quantité d'énergie reçue sur le capteur y compris pendant la période d'irradiation. La caractéristique selon laquelle la photodiode de détection est apte à fournir un signal périodique, la période de ce signal périodique étant définie par la période de lecture de la photodiode de détection, permet toute sorte d'implémentation de contrôle d'irradiation, jusque là non accessible avec les dispositifs connus.

L'invention permet en particulier de faire une analyse quantitative de l'énergie instantanée reçue en permanence. En suivant cette énergie reçue instantanée, il est possible de détecter des dysfonctionnements du générateur. Il est ainsi rendu possible selon l'invention de connaître la qualité du générateur sans faire appel à des appareils dédiés aptes à mesurer la quantité d'énergie effectivement émise.

Ainsi, selon une caractéristique avantageuse, le module de commande est apte à insérer une courbe de suivi de l'énergie reçue dans une zone dédiée de l'image acquise.

Cette caractéristique permet, en analysant n'importe quelle image acquise avec un capteur selon l'invention sous l'irradiation d'un générateur particulier, d'extraire de cette image la courbe de suivi de l'énergie reçue. Cela permet d'évaluer la qualité d'émission du générateur en question puisqu'on dispose de sa courbe d'émission.

La zone dédiée où est insérée la courbe oscillogramme de l'énergie reçue est préférentiellement masquée dans l'image. Elle est soit prise sur l'image elle-même en constituant, par exemple la première ou la dernière ligne de l'image, ou encore être une ligne additionnelle dite zéro ajoutée à l'image.

L'invention propose donc, selon cette caractéristique avantageuse, de condamner ainsi une très faible partie de l'image pour y insérer et mémoriser des données relatives aux caractéristiques du générateur puisque relatives à l'énergie reçue, et donc émise. Ainsi, lorsqu'une image de mauvaise qualité est obtenue, il est toujours possible, avec l'invention, de déterminer si la qualité dégradée est due à une émission dégradée du générateur ou s'il faut chercher d'autres raisons, par exemple un bougé du capteur pendant l'acquisition.

On rappelle ici que le mode d'attente dans lequel les photodiodes d'acquisition sont inhibées signifie que l'on ne charge pas les photons grâce à une purge périodique ou grâce à un blocage à la réception des photons. Ainsi, dans le mode d'attente, on purge ou on bloque tant que la photodiode de détection n'a pas détecté l'irradiation. Cela permet d'obtenir un bon rapport signal sur bruit dans l'image finale. Sinon les lumières parasites reçues pendant le temps d'attente créeraient un phénomène de bruit de fond sur l'image qui nuirait à sa qualité.

Il est par ailleurs nécessaire et connu que la photodiode de détection doit être plus grande que les photodiodes d'acquisition afin d'être suffisamment sensible pour détecter l'irradiation très rapidement quand on est en mode d'attente. Dans un tel cas, elle est alors très aisément sujette à saturation. Or, selon la caractéristique fonctionnelle de l'invention, la photodiode doit continuer de fournir un signal quantifiant y compris pendant l'acquisition.

Ainsi avantageusement, le module de commande est apte à modifier la résolution de la photodiode de détection, en fonction du signal de sortie de la photodiode de détection, afin d'assurer l'absence de saturation de la photodiode de détection lors de l'irradiation.

Une telle modification de résolution est utile lorsque la sensibilité requise pour réaliser la détection de l'irradiation ne permet pas l'absence de saturation lors de l'irradiation.

Cette caractéristique permet que la diode de détection présente une taille suffisante pour être assez sensible lors du mode d'attente et qu'elle soit néanmoins apte à fournir un signal quantitatif représentatif de l'énergie reçue tout au long de l'irradiation puisque c'est la fonction originale et nouvelle de l'invention.

Cette caractéristique peut, selon l'invention, être mise en oeuvre de deux façons particulières agissant sur deux phénomènes de saturation distincts.

Le premier phénomène est le phénomène de saturation de la photodiode elle-même qui sature physiquement si elle reçoit une quantité d'énergie supérieure à une quantité d'énergie dite de saturation entre deux lectures. Si l'énergie reçue entre deux lectures est supérieure à la quantité d'énergie de saturation, le signal de lecture de la photodiode ne peut pas être quantitatif.

Ce signal de lecture de la photodiode est ensuite typiquement amplifié par un étage de traitement électronique avant d'être généralement échantillonné en le signal de sortie de la photodiode.

On comprend ici que l'on désigne par « signal de lecture de la photodiode », le signal tel que lu sur la photodiode et par « signal de sortie de la photodiode », le signal tel qu'obtenu après amplification.

Le second phénomène est le phénomène de saturation à cause de l'amplification du signal de lecture de la diode de détection. En effet, l'amplification ne peut pas produire un signal de sortie de la photodiode supérieur à la tension qui l'alimente. Si l'amplification d'un signal de lecture de la photodiode non saturée, et donc quantitatif, mène à un signal de sortie supérieur à cette tension d'alimentation, le signal de sortie n'est alors pas quantitatif.

Selon une caractéristique particulière de l'invention, pour modifier la résolution, le module de commande est apte à augmenter la fréquence de lecture de la photodiode de détection après détection de l'irradiation.

Dans ce cas, la capacité de traitement de l'énergie reçue de la photodiode est augmentée. En effet, en augmentant la fréquence de lecture, la photodiode de détection peut absorber plus d'énergie dans un même laps de temps et le phénomène de saturation peut alors ne pas être observé.

Dans les arts antérieurs connus, l'élément de détection ne quantifie pas le flux d'énergie reçue et il est donc égal que, pendant l'irradiation, cet élément de détection soit en saturation. C'est ce qui est d'ailleurs observé en pratique dans les arts antérieurs. Or cela est contraire à l'objet de l'invention, qui permet que la quantité d'énergie reçue soit connue par le module de commande en permanence et ce de manière quantitative.

Augmenter la fréquence revient donc à diminuer la résolution de la photodiode puisque, pour une même puissance reçue, la lecture de la photodiode de détection interviendra pour des charges de la photodiode de détection moins importantes. Cela ne nuit néanmoins pas à la précision de la lecture pendant l'irradiation puisque des quantités importantes d'énergie sont reçues et que l'augmentation de fréquence permet précisément que les quantités lues soient représentatives de l'énergie réellement reçue.

Une augmentation de fréquence de lecture peut correspondre à multiplier celle-ci par dix, par exemple. Une telle augmentation de fréquence de lecture permet d'obtenir la saturation de la photodiode uniquement pour une énergie reçue dans un même laps de temps 10 fois plus importante qu'avec la fréquence initiale.

Selon une autre caractéristique particulière de l'invention, chaque signal lu sur la photodiode de détection étant amplifié au sein d'une unité de traitement selon un gain dit électronique pour former le signal de sortie du capteur, le module de commande est apte à modifier ce gain électronique.

Cette caractéristique permet d'assurer que le signal de sortie reste quantifiant dès lors que la photodiode n'est pas, par ailleurs, saturée.

En effet, typiquement, le gain utilisé lors du mode d'attente est très élevé afin de pouvoir détecter l'irradiation le plus rapidement possible. S'il est conservé à cette valeur lors d'une irradiation, le signal de sortie de la photodiode qui est le signal de lecture amplifié dépassera vraisemblablement la tension d'alimentation de l'étage d'amplification et ne sera plus quantifiant et ce, même en présence d'une augmentation de fréquence de lecture de la photodiode de détection.

Cette caractéristique permet de résoudre le conflit entre la finesse de détection pendant le mode d'attente et la nécessité de rester quantifiant pendant le mode d'acquisition.

Avantageusement, la modification de gain aura donc lieu dès lors qu'une irradiation sera détectée. Dans le cas où la modification de fréquence de lecture est prévue pour être dépendante du niveau d'énergie reçue au début de l'irradiation, il sera avantageux que la modification du gain intervienne avant la modification de fréquence de lecture. Elle est donc avantageusement utilisée en complément et en combinaison avec la modification de la fréquence de lecture de la photodiode.

L'utilisation d'une photodiode de détection intégrée sur la même structure physique que les photodiodes d'acquisition de l'image, facilite la réalisation du contrôle de la fréquence de lecture ou de la modification du gain.

Avantageusement, quatre niveaux de gain électronique sont prévus selon l'invention. Cette caractéristique offre quatre niveaux de résolution de la quantité d'énergie lue sur la photodiode et autorise l'obtention d'un signal de sortie quantificateur pour des quantités d'énergie lue très variées. En effet, les niveaux de gains extrémaux pourront être dédiés, l'un, le plus élevé, à la résolution des quantités d'énergie lues comprises entre 0 et 10 mV, l'autre, le plus faible, à la résolution des quantités d'énergie lues comprise entre 0 et 1000 mV.

Selon une autre caractéristique, le signal de sortie de la photodiode de détection est quantifié de manière continue entre deux valeurs analogiques.

Cette caractéristique correspond à l'échantillonnage du signal de sortie qui est alors connu sous forme d'une valeur numérique permettant une connaissance fine de l'énergie reçue. Un tel échantillonnage est avantageusement réalisé sur 8 bits.

Dans une réalisation avantageuse, la photodiode de détection est intégrée sur la périphérie du capteur matriciel.

Cette caractéristique permet d'intégrer une photodiode rectangulaire de grande taille sur le contour des photodiodes d'acquisition qui sont, elles, intégrées sous forme d'une matrice. La technologie CMOS autorise une telle intégration.

Dans une application particulière, le module de commande est apte à arrêter le mode d'acquisition dès lors qu'une chute du signal de sortie de la photodiode de détection est observée.

Cette caractéristique permet de contrôler l'acquisition d'images en fonction de l'énergie reçue. Cela permet d'obtenir des images de bonne qualité, en assurant qu'une énergie suffisante et optimale est reçue en assurant l'absence d'effet de saturation pénalisant sur les photodiodes d'acquisition. Dans le cas de l'utilisation d'un générateur AC, on entend par chute du signal de sortie, une absence de signal de sortie durant plus d'une période du générateur.En particulier, selon une caractéristique avantageuse, l'analyse de l'énergie reçue permet de calculer, pendant l'acquisition, la quantité d'énergie reçue par le capteur afin de la comparer avec une quantité d'énergie optimale à recevoir pour le capteur.

Cette caractéristique permet de savoir à quel moment l'énergie reçue par le capteur correspond à l'énergie optimale pour l'obtention d'une image de bonne qualité. Cela pourra permettre d'arrêter le mode d'acquisition une fois cette énergie optimale atteinte et/ou une commande pourra être envoyée au générateur pour qu'il s'arrête.

Ainsi, selon une caractéristique avantageuse de l'invention, le module de commande est apte à envoyer une commande à destination d'un générateur d'irradiation afin qu'il cesse l'irradiation dès lors que l'analyse de l'énergie reçue montre qu'une quantité d'énergie optimale à été reçue.

Cette caractéristique avantageuse permet d'optimiser la quantité d'irradiation reçue par le patient puisque le générateur, lui-même, est arrêté dès lors qu'une quantité utile à l'obtention d'une image de qualité a été reçue sur le capteur.

Avantageusement aussi, le module de commande est apte à arrêter le mode d'acquisition dès lors que l'analyse de l'énergie reçue montre que la quantité d'énergie énergie optimale a été reçue.

L'invention concerne egalement un procédé de commande d'un dispositif d'acquisition d'image selon la revendication indépendante 9.

Ce procédé assure un suivi de l'énergie reçue par le capteur matriciel avant l'irradiation et tout au long de l'irradiation.

Selon une implémentation préférée, les différentes étapes du procédé sont déterminées par des instructions de programmes d'ordinateur.

En conséquence, l'invention vise aussi une programme d'ordinateur selon la revendication indépendante 10, sur un support d'informations, ce programme étant susceptible d'être mis en oeuvre dans un module de commande et comportant des instructions adaptées à la mise en oeuvre des étapes du procédé selon l'invention. Ce programme peut utiliser n'importe quel langage de programmation et être sous la forme de codes-source, codes-objet ou de codes intermédiaires entre codes-source et codes-objet, tels que dans une forme partiellement compilée ou dans n'importe quelle autre forme souhaitable.

L'invention vise aussi un support d'informations selon la revendication indépendante 11, lisible par un module de commande et comportant des instructions d'un programme d'ordinateur tel que mentionné ci-dessus. Le support d'informations peut être n'importe quel entité ou dispositif capable de stocker le programme. Le support peut être un élément matériel ou un support transmissible, pouvant être notamment téléchargé sur un réseau de type internet. Alternativement, le support d'informations peut être un circuit intégré dans lequel le programme est incorporé.

### Brève description des dessins

D'autres caractéristiques et avantages de la présente invention ressortiront de la description faite ci-dessous en référence aux figures annexées qui en illustrent un exemple de réalisation dépourvue de tout caractère limitatif, figures sur lesquelles :

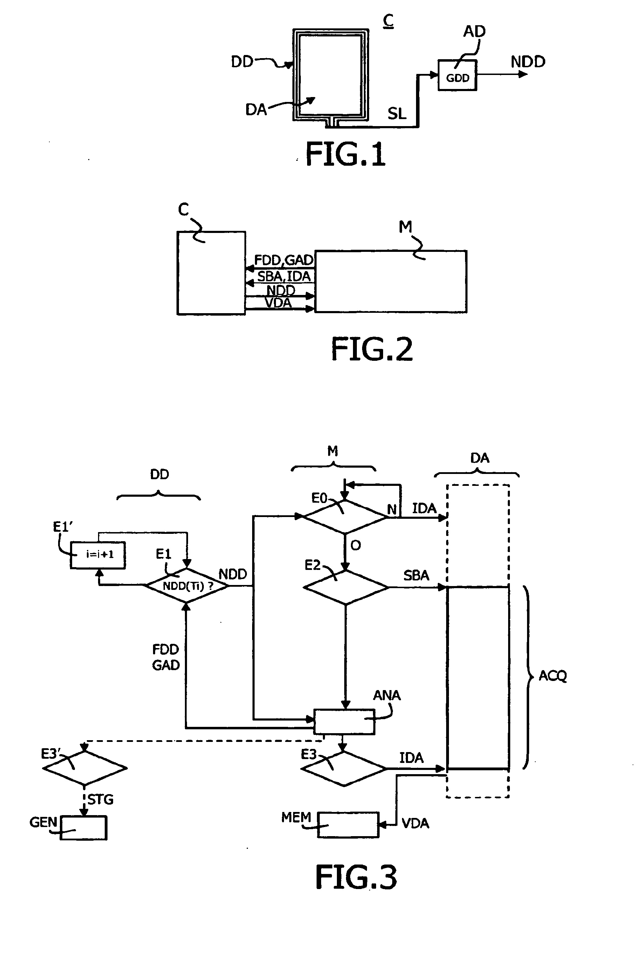

- la figure 1 représente schématiquement un capteur tel qu'utilisé dans un dispositif d'acquisition d'images selon l'invention;
- la figure 2 montre schématiquement la relation entre un module de commande, tel qu'implémenté dans un dispositif selon l'invention, et le capteur d'acquisition d'images;
- la figure 3 montre un organigramme d'un procédé selon l'invention ;

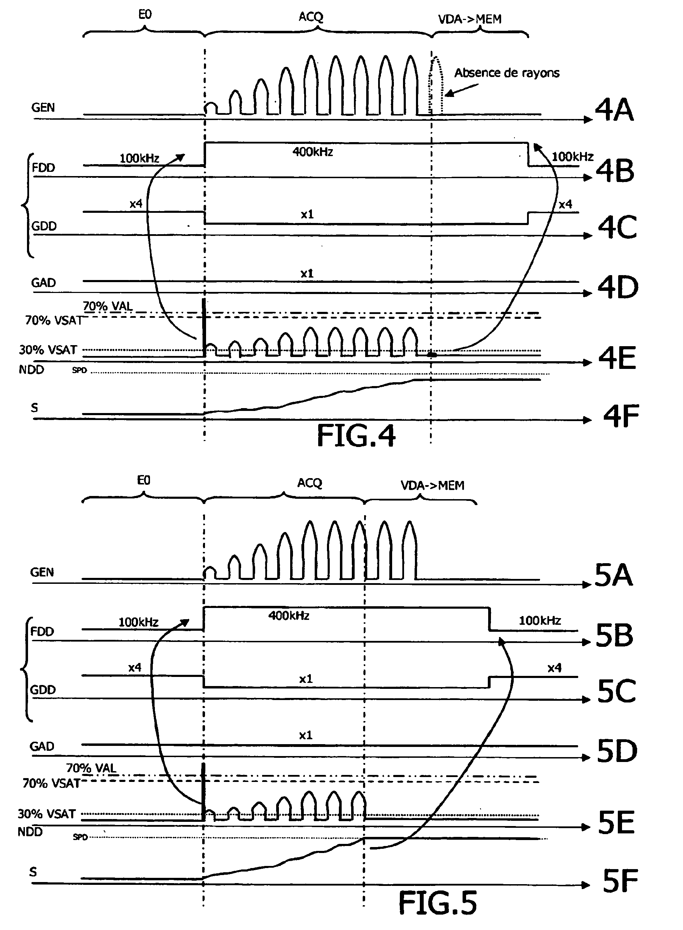

- les figures 4A à 4F montrent des diagrammes temporels des comportements simultanés respectivement d'un générateur d'irradiation à courant alternatif, d'une fréquence de lecture de la photodiode de détection dans un dispositif selon l'invention apte à modifier la résolution de la photodiode de détection par une augmentation de la fréquence de lecture de la photodiode de détection et à détecter l'arrêt du rayonnement, du gain de la photodiode, du gain électronique mis en oeuvre dans un module de commande du dispositif, du signal de sortie de la photodiode de détection et une lecture cumulée du signal de sortie ;
- les figures 5A à 5F montrent des diagrammes temporels des comportements simultanés respectivement d'un générateur d'irradiation à courant alternatif, d'une fréquence de lecture de la photodiode de détection dans un dispositif selon l'invention apte à modifier la résolution de la photodiode de détection par une augmentation de la fréquence de lecture de la photodiode de détection, à détecter qu'un seuil d'énergie reçue prédéterminé a été atteint et à inhiber l'acquisition d'image sur le capteur matriciel, du gain de la photodiode, du gain électronique mis en oeuvre dans un module de commande du dispositif, du signal de sortie de la photodiode de détection et une lecture cumulée du signal de sortie ;

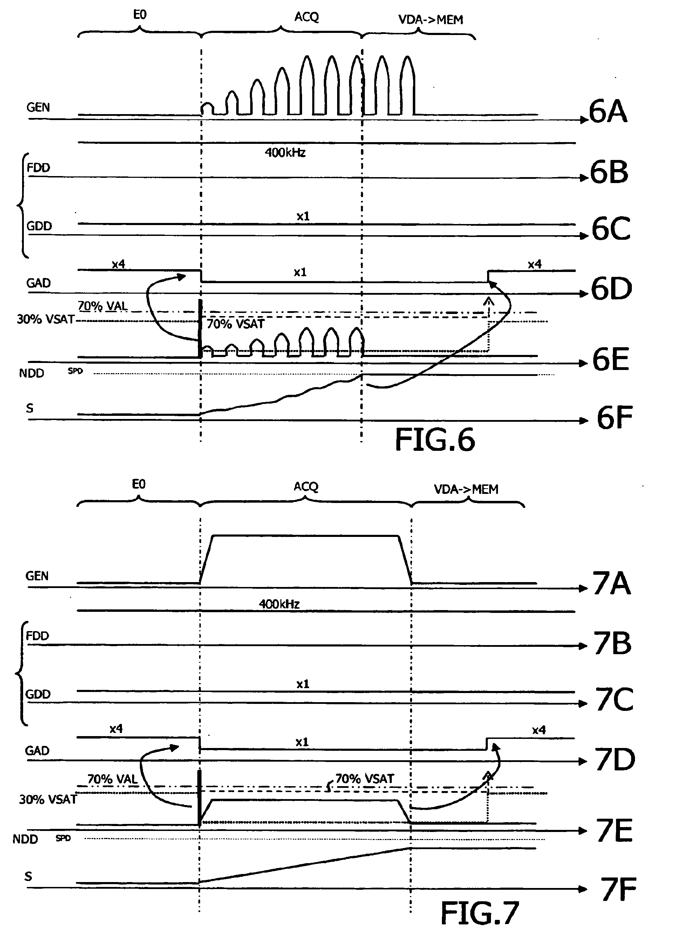

- les figures 6A à 6F montrent des diagrammes temporels des comportements simultanés respectivement d'un générateur d'irradiation à courant alternatif, d'une fréquence de lecture de la photodiode de détection dans un dispositif selon l'invention apte à modifier la résolution de la photodiode en modifiant un gain électronique de traitement du signal de sortie de la photodiode de détection, à détecter qu'un seuil d'énergie reçue prédéterminé a été atteint et

apte à inhiber l'acquisition d'image sur le capteur matriciel, du gain de la photodiode, du gain électronique mis en oeuvre dans un module de commande du dispositif, du signal de sortie de la photodiode de détection et une lecture cumulée du signal de sortie ;
- les figures 7A à 7F montrent des diagrammes temporels des comportements simultanés respectivement d'un générateur d'irradiation à courant continu, d'une fréquence de lecture de la photodiode de détection dans un dispositif selon l'invention apte à modifier la résolution de la photodiode en modifiant un gain électronique de traitement du signal de sortie de la photodiode de détection, à détecter qu'un seuil d'énergie reçue prédéterminé a été atteint et apte à inhiber l'acquisition d'image sur le capteur matriciel, du gain de la photodiode, du gain électronique mis en oeuvre dans un module de commande du dispositif, du signal de sortie de la photodiode de détection et une lecture cumulée du signal de sortie ;

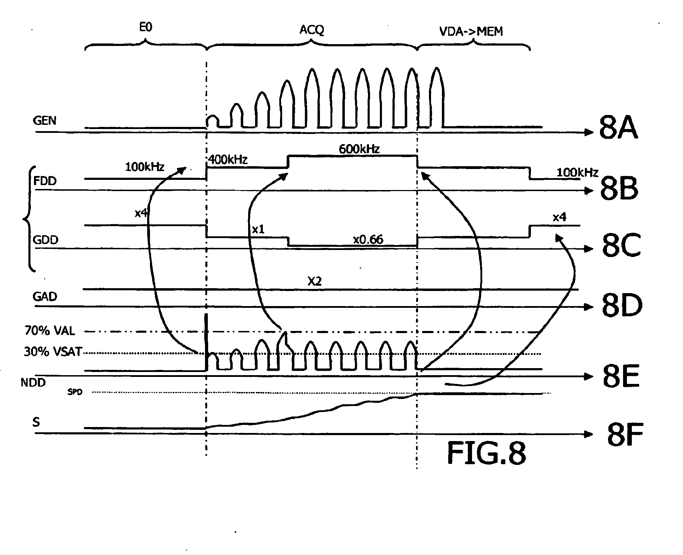

- les figures 8A à 8F montrent des diagrammes temporels des comportements simultanés respectivement d'un générateur d'irradiation à courant alternatif, d'une fréquence de lecture de la photodiode de détection dans un dispositif selon l'invention apte à modifier la résolution de la photodiode de détection par une augmentation de la fréquence de lecture de la photodiode de détection à tout moment de l'irradiation, à détecter qu'un seuil d'énergie reçue prédéterminé a été atteint et apte à inhiber l'acquisition d'image sur le capteur matriciel, du gain de la photodiode, du gain électronique mis en oeuvre dans un module de commande du dispositif, du signal de sortie de la photodiode de détection et une lecture cumulée du signal de sortie.

### Description détaillée d'un mode de réalisation

La figure 1 représente un capteur C selon l'invention de manière schématique. Ce capteur matriciel C se présente sous la forme d'une matrice rectangulaire centrale sur laquelle sont intégrées des photodiodes dites d'acquisition DA.

Sur la périphérie des photodiodes d'acquisition DA est intégrée préférentiellement une unique photodiode de détection référencée DD.

Dans une autre réalisation moins favorable, il pourrait être envisagé d'intégrer une pluralité de photodiodes de détection implémentées de manière à être lues périodiquement à la manière de l'invention. Néanmoins il est souhaitable que la taille des photodiodes de détection DD soit bien plus importante que la taille des photodiodes d'acquisition DA constituant le centre du capteur matriciel. En effet, on s'assure ainsi que la photodiode de détection sature plus rapidement et qu'elle a donc une sensibilité idoine pour la détection de l'irradiation. Il est donc préférable, pour une même surface utilisée, de n'intégrer qu'une unique diode de détection. Avantageusement une telle unique photodiode de détection DD sera intégrée sur la périphérie des photodiodes d'acquisition DA.

Il va de soi qu'en variante, les photodiodes d'acquisition et/ou de détection peuvent être remplacées par tout type d'éléments photosensibles, comme des phototransistors par exemple.

Le capteur matriciel C est donc intégré de manière à pouvoir inclure ces deux types de diodes, par exemple en technologie CMOS. Il est sensible aux irradiations radiologiques au travers d'un scintillateur qui transforme la quantité d'énergie reçue sous forme de rayons X en une quantité de lumière.

L'énergie reçue sur la photodiode de détection DD est alors lue périodiquement selon la fréquence de lecture. Les données analogiques lues sur la photodiode constituent un signal de lecture de la photodiode SL. Des signaux de lecture SL périodiques sont ainsi obtenus lors des lectures successives de la photodiode de détection. Ils sont représentatifs de l'énergie reçue.

Ainsi que représenté schématiquement sur la figure 1, le capteur C est associé à une unité de traitement électronique AD permettant de transférer les données analogiques SL lues sur le capteur en données numériques qui constituent, à la sortie de l'unité de traitement AD, un signal de sortie de la photodiode de détection, noté NDD. Ce signal de sortie NDD est également périodique.

L'unité de traitement analogique-numérique AD met en oeuvre un gain de traitement électronique, noté GAD, lors du transfert des données analogiques telles que lues sur la photodiode de détection DD vers une quantité numérique. L'unité AD réalise donc une amplification du signal de lecture en utilisant le gain GAD puis un échantillonnage de la valeur analogique amplifiée obtenue.

Avantageusement, l'échantillonnage est tel que l'on obtient une valeur pour le signal de sortie NDD quasiment analogique entre deux valeurs extrémales, ce signal étant représentatif de l'énergie reçue sur le capteur.

L'unité AD est avantageusement partie intégrante du capteur matriciel C ainsi que schématiquement représenté sur la figure 1. Elle peut aussi être déportée sur un composant contrôleur qui inclurait avantageusement alors aussi le module de commande M. D'ailleurs, on note aussi que le module de commande M peut aussi être intégré sur le même circuit intégré que le capteur C ou être intégré sur un élément séparé, par exemple, comme stipulé ci-dessus, un composant contrôleur du capteur C.

Ainsi que représenté sur la figure 2, le capteur C de la figure 1 incluant l'unité AD est implémenté en relation avec un module de commande M, l'ensemble des deux formant un dispositif d'acquisition d'images selon l'invention. Dans le cadre du fonctionnement du dispositif d'acquisition, le module de commande M et le capteur C échangent des signaux entre eux. La nature de ces signaux est explicitée dans la suite en référence à la figure 3.

La figure 3 représente un organigramme du procédé selon l'invention. Ce procédé, mis en oeuvre dans le module de commande M du dispositif d'acquisition d'images selon l'invention, comprend des étapes périodiques d'envoi de commande de lecture de la photodiode de détection DD. Des commandes de lecture de la photodiode de détection DD sont donc envoyées régulièrement et en permanence.

Pour faciliter sa lecture, la figure 3 est divisée en trois parties où l'on retrouve les étapes relatives, respectivement, au fonctionnement de la diode de détection DD, au fonctionnement du module de commande M et au fonctionnement des diodes d'acquisition DA. En effet, l'ensemble des étapes étant commandées par le module de commande M, mais étant réalisées, soit par la diode de détection DD, soit par le module M lui-même, soit par les diodes d'acquisition DA, il a semblé plus commode de séparer visuellement ces étapes.

Ainsi, la lecture périodique de la diode de détection DD sous commande du module M est représentée par une étape E1, selon laquelle un signal de sortie NDD est obtenu à un instant Ti. La périodicité de cette lecture est illustrée schématiquement sur la figure 3 par une étape d'incrémentation E'1 de l'instant Ti à Ti+1.

Lorsque le capteur matriciel C est en mode d'attente, le signal NDD est envoyé vers le module de commande M afin d'être utilisé dans une étape E0 dont l'objet est de détecter l'occurrence d'une irradiation.

Dans le cas où aucune irradiation n'est détectée (cas N : pas de saturation de la diode DD ou dépassement d'un seuil de détection ou observation d'une dynamique de montée d'énergie reçue), les diodes d'acquisition DA sont soumises à une commande d'inhibition, notée IDA sur la figure 3. Les diodes d'acquisition DA sont alors, soit purgées périodiquement, soit le transfert de l'énergie reçue est inhibé, les photons n'étant pas transmis.

Dans le cas où une irradiation est détectée dans l'étape E0 (cas O : saturation de la diode DD ou dépassement d'un seuil de détection ou observation d'une dynamique de montée d'énergie reçue), une étape E2 de basculement est déclenchée. Cette étape E2 a pour effet l'envoi d'une commande de basculement SBA du mode d'attente au mode d'acquisition ACQ vers les diodes d'acquisition DA.

Cette étape E2 de basculement peut également générer une commande à destination de la diode de détection DD de manière à modifier sa résolution. En particulier, une commande FDD de modification de la fréquence de lecture de la photodiode de détection DD peut alors être envoyée. Avantageusement, et même de manière préalable à la commande de modification de fréquence de lecture FDD, une commande de modification du gain GAD de traitement électronique du signal de lecture SL de la photodiode de détection DD est aussi générée à ce moment-là.

Aussi, afin de déterminer la pertinence d'une commande de modification de résolution de la photodiode de détection DD, il est utile que la valeur du signal de sortie NDD soit aussi envoyé, en permanence, vers une unité d'analyse ANA du module de commande M, dans lequel la quantité d'énergie reçue et la dynamique de réception de l'énergie sont analysées au sein du module de commande M.

L'unité ANA fonctionne ainsi avantageusement en permanence. Elle peut cependant aussi être activée seulement lors de l'étape E2. En fonction de la dynamique et de la quantité d'énergie reçue, cette unité ANA est apte à décider, et éventuellement à calculer, une modification de fréquence FDD de lecture de la diode de détection DD et/ou une modification du gain de traitement électronique GAD. Cette unité d'analyse ANA est également apte à déterminer si une quantité d'énergie optimale a été reçue ou encore, éventuellement, à déterminer une durée optimale pour l'acquisition de l'image en fonction de l'énergie reçue et de la dynamique de réception de cette énergie.

Dans le mode de réalisation présenté sur la figure 3, le module de commande M est apte, dans une étape E3, à envoyer un signal d'inhibition IDA vers les diodes d'acquisition DA, de manière à arrêter l'acquisition par ces diodes. Ce signal peut être envoyé à l'issue d'une durée optimale calculée par l'unité ANA, à l'issue d'une durée fixe prédéterminée ou encore une fois une quantité d'énergie optimale reçue sur le capteur. La valeur lue sur les diodes d'acquisition, notée VDA, est alors envoyée vers une mémoire MEM, ainsi que représenté sur la figure 3.

Selon une caractéristique avantageuse, l'étape d'analyse ANA peut aussi mener à une étape E3', simultanée à l'étape E3 et représentée en traits pointillés, et qui engendre l'arrêt du générateur, noté GEN ici, qui irradie le capteur C dès lors qu'une quantité d'énergie optimale a été reçue. Cette étape E3' engendre l'envoi d'une commande d'arrêt STG du générateur GEN.

Les figures 4 à 8 montrent des diagrammes temporels des différentes grandeurs pertinentes montrant le fonctionnement de plusieurs réalisations d'un dispositif selon l'invention.

La figure 4 s'intéresse au fonctionnement du dispositif selon l'invention lorsqu'un générateur GEN d'irradiation à courant alternatif AC est utilisé. L'énergie, notée aussi GEN sur la figure 4, émise par le générateur AC en fonction du temps est représentée sur la figure 4A. Un tel générateur de type AC émet par exemple des rayons X toutes les 20 ms, donc à une fréquence de 50 Hz. La largeur des impulsions est généralement d'environ 10 ms. Le dispositif dont le fonctionnement est illustré sur la figure 4 est apte à détecter la fin du rayonnement avant que ne soit atteint un seuil d'énergie reçue prédéterminé SPD. Ce seuil prédéterminé SPD est fonction de la taille du capteur et correspond à une quantité d'énergie optimale reçue par le capteur pour l'obtention d'une image de bonne qualité.

Selon l'invention, la photodiode de détection DD est lue périodiquement à une fréquence très supérieure à la fréquence des impulsions d'irradiation, ici à une fréquence FDD de 100 KHz ainsi que présenté sur la figure 4B. On constate que la fréquence d'horloge à 100 KHz correspond à un taux d'échantillonnage de la photodiode de détection produisant une mesure toutes les 10µs. Dans la réalisation proposée, cela correspond à un gain de la photodiode de détection GDD 4 fois plus important qu'à 400kHz, avec une exposition constante de rayons X, ainsi que présenté sur la figure 4C. Le signal de sortie NDD de la photodiode de détection DD est représenté sur la figure 4E. On constate que la valeur NDD est non nulle et constante tant que le générateur AC n'émet pas. L'étape E0 est alors bouclée sur elle-même, ainsi que représenté sur la figure 3.

Lorsque le générateur AC commence à émettre, le signal de sortie de la photodiode de détection NDD augmente fortement et rapidement, ainsi que représenté par un trait vertical élargi sur la figure 4E. Dans la mesure où les émissions de rayons X durent environ 10 ms, la fréquence de lecture de la photodiode de détection permet d'obtenir 80 échantillons de mesure sur une unique période d'émission du générateur GEN. Un tel échantillonnage permet d'obtenir une mesure correcte selon la Loi de NYQUIST-SHANNON.

La détection du début de l'irradiation est donc réalisée sur un petit nombre d'échantillons de lecture de la photodiode de détection DD et n'est donc pas représentable sur les diagrammes temporels de la figure 4E autrement que, schématiquement, par un trait élargi. On constate ici que la détection de l'émission de rayons X est donc quasiment instantanée par rapport à la dynamique du générateur et à celle de la mesure.

Il existe divers modes de réalisation pour détecter l'occurrence de l'irradiation. Il est possible de considérer qu'une irradiation est détectée à partir du moment où le signal de sortie NDD pour au moins un échantillon de mesures dépasse une valeur seuil d'intensité d'énergie reçue. Le but étant de déclencher le plus rapidement possible, il est utile que le gain soit le plus important possible et la fréquence d'échantillonnage la plus faible possible en respectant les lois de l'échantillonnage. On remarque ici que la fréquence d'échantillonnage, même la plus faible possible reste, de toutes façons, très supérieure à la fréquence du rayonnement et permet donc, quoi qu'il en soit, une détection très rapide du rayonnement par rapport à la dynamique propre de ce rayonnement.

Il est également possible de ne détecter l'occurrence d'une irradiation qu'après avoir suivi un petit nombre d'échantillons de mesures du signal NDD, sur lesquels la dynamique de montée de l'énergie reçue a été analysée. La détection de l'irradiation est alors réalisée par un suivi de la dynamique de l'énergie reçue.

Cela permet d'utiliser la signature en montée d'irradiation du générateur pour déclencher le basculement vers le mode d'acquisition. Cette réalisation évite de déclencher le mode d'acquisition quand le capteur est irradié avec des énergies parasites autres que celle issue du scintillateur et correspondant aux rayons X émis par le générateur.

Dès lors que l'émission par le générateur de rayons X a été détectée, conformément à la figure 3, l'étape E2 génère un signal de commande SBA à destination des diodes d'acquisition, permettant de déclencher le début de l'acquisition ACQ. De manière simultanée, lorsque l'unité d'analyse ANA, qui a également reçu les valeurs du signal de sortie de la photodiode de détection NDD, sait, par exemple, d'après la signature en montée du générateur, que l'intensité de l'énergie reçue dépasse ou va dépasser le seuil de saturation de la photodiode de détection DD, cette unité ANA est apte à envoyer un signal de commande vers le capteur C de manière à augmenter la fréquence de lecture FDD de la diode de détection DD, ainsi que représenté sur la figure 4B où la fréquence passe de 100 à 400 KHz. Le gain GDD de la photodiode DD est alors divisé par 4, et cela permet qu'aucune saturation de la photodiode de détection DD ne soit observée tout au long de l'étape d'acquisition. L'unité d'analyse ANA considère par exemple que l'énergie reçue va dépasser le seuil de saturation lorsqu'au moins 70% de l'énergie correspondant au seuil de saturation VSAT de la photodiode a été reçue. Cela assure d'obtenir une valeur quantifiable.

En effet, la saturation de la photodiode de détection DD pendant l'acquisition d'une image empêcherait d'être quantitatif pour la mesure de l'énergie reçue et empêcherait donc de déterminer avec précision la limite d'exposition.

Cette limite d'exposition est déterminée avantageusement grâce à un signal de somme des énergies reçues instantanées S. Ce signal représenté sur la figure 4F est incrémenté à chaque impulsion envoyée par le générateur GEN.

Sur la figure 4, l'arrêt de l'acquisition de l'image n'est pas contrôlé grâce au signal S. L'énergie reçue est donc suivie mais n'est pas utilisée pour optimiser l'exposition de l'image acquise. En effet, c'est ici la détection de la fin de l'émission du générateur GEN qui déclenche la fin de l'acquisition de l'image.

La photodiode de détection DD est avantageusement utilisée pour détecter cet arrêt de l'émission du générateur. En effet, lorsque le signal NDD chute en dessous d'une valeur donnée pendant une durée supérieure à la demi-période d'émission du générateur, l'unité d'analyse ANA est avantageusement apte à générer une commande pour arrêter l'acquisition par les diodes d'acquisition DA.

On remarque ici que le gain de l'amplification électronique GAD n'est pas modifié par le module de commande M. Cela signifie que les signaux de lecture de la photodiode de détection amplifiés ne dépassent pas 70% de la tension d'alimentation VAL de l'unité d'amplification AD.

Suite à l'arrêt du rayonnement, avantageusement, l'unité d'analyse ANA est telle que, si une tension inférieure à 30% du seuil de saturation VSAT de la photodiode, la fréquence de lecture FDD est alors diminuée et le gain GAD est augmenté. Cette caractéristique permet de retourner aux conditions favorables à la détection d'un nouveau rayonnement par la photodiode de détection DD.

La figure 5 présente des diagrammes temporels similaires à ceux de la figure 4, pour l'utilisation du même générateur, dont l'émission d'irradiation GEN est de nouveau représentée sur la figure 5A. Dans le dispositif dont le fonctionnement est montré sur la figure 5, la résolution de la photodiode de détection DD est également modifiée par l'augmentation de la fréquence de lecture de la photodiode de détection DD lors de la détection de l'irradiation ainsi que visible sur les figures 5B et 5C.

La différence avec la figure 4 consiste en une inhibition de l'acquisition d'image dès lors que la somme des énergies reçues S a atteint un seuil optimal d'énergie reçue prédéterminé SPD pour l'obtention d'une image correcte et optimale du point de vue de l'exposition. Le capteur C reçoit alors, suite à l'enclenchement de l'étape E3, tel que représentée sur la figure 3, un signal de commande IDA qui va inhiber les photodiodes d'acquisition DA. Le transfert de l'image dure alors environ une seconde. On remarque ici que la photodiode de détection DD peut également être inhibée. On constate sur la figure 5A et la courbe GEN que le générateur continue alors d'émettre deux impulsions malgré la fin de l'acquisition de l'image.

Dans un mode de réalisation avantageux de l'invention non illustré ici, le module de commande M, commandant le capteur C, est apte à envoyer vers le générateur une commande pour que celui-ci arrête l'émission dès lors que le seuil optimal prédéterminé SPD a été atteint et que l'acquisition a été arrêtée.

La figure 6 montre des diagrammes temporels obtenus avec l'utilisation d'un même générateur que celui des figures 4 et 5 mais avec, cette fois, une modification du gain électronique GAD afin d'assurer l'absence de saturation au niveau de l'amplification du signal de lecture par dépassement de la tension d'alimentation de l'unité AD.

Ici, en mode d'attente, le gain GAD est multiplié par 4. Cela est utile pour augmenter la sensibilité de la détection. Ce gain GAD de 4 s'applique aussi à la tension de saturation VSAT de la photodiode de détection qui apparaît donc plus élevée sur le signal de sortie NDD. On remarque ainsi que les 70% VSAT ne sont pas représentés au début et à la fin de la figure 4D car en dehors de l'échelle représentée. En revanche, le niveau de saturation du signal de sortie vis-à-vis de la tension d'alimentation VAL n'est pas modifié par l'application du gain GAD. On remarque ici que c'est le dépassement de la valeur 70% VAL par le signal de sortie NDD qui est prévalent pour déclencher une modification de la résolution de la photodiode ou de l'amplification au lieu du dépassement de la valeur 70% VSAT observé dans les figures précédentes.

Sur la figure 6D, lors de la détection du rayonnement, le gain GAD est divisé par 4. Cette modification du gain GAD permet d'échantillonner sur un intervalle différent de niveaux d'énergie tel que lus sur la photodiode de détection DD. En effet, cette modification permet de conserver le caractère quantificateur du signal de sortie NDD pour des énergies lues sur la photodiode plus importantes qu'avec le gain de 4 où une petite quantité d'énergie lue sur la photodiode DD pouvait être repérée très rapidement, ce qui est utile pendant le mode d'attente.

En absence de la modification du gain GAD, la tension amplifiée NDD dépasserait la tension d'alimentation VAL et cela entrainerait la perte du caractère quantificateur du signal de sortie NDD.

Pour que soit mise en oeuvre seulement la modification du gain électronique GAD, il est nécessaire que la photodiode ne sature pas à la fréquence utilisée. C'est pourquoi, sur cette figure, la fréquence utilisée est directement de 400 KHz, cette fréquence donnant la résolution la plus faible à la diode, y compris pendant le mode d'attente mais la plus grande capacité de réception d'énergie sans saturation.

Si la fréquence de la diode de détection DD était de 100 KHz, l'intensité reçue sur la photodiode de détection DD provoquerait la saturation de celle-ci. On observerait alors un écrêtage des impulsions observées sur la figure 6, quelque soit le gain GAD utilisé dans le traitement du signal issu de la photodiode de détection DD.

En pratique, les modifications de gain d'amplification et de fréquence de lecture sont utilisées en combinaison. Le gain est avantageusement diminué dès la détection de l'irradiation, la fréquence étant subséquemment ou simultanément augmentée. Lorsque le module de commande M est tel que la modification de la fréquence de lecture est déterminé à chaque fois en fonction de l'énergie reçue, il est très utile que le gain soit de suite diminué de manière très importante, par exemple en passant de 1000 à 1, afin que la saturation de l'amplification électronique ne masque pas le signal quantificateur tel que lu sur la photodiode.

En effet, il peut arriver qu'un gain important entraine qu'un signal quantificateur lu sur la photodiode non saturée, ne soit plus quantificateur après l'amplification car ayant atteint la tension d'alimentation VAL. Cela est dommageable quand justement le signal de sortie NDD, qui est le signal de lecture amplifié, est utilisé pour définir la fréquence de lecture FDD de la photodiode de détection DD. Il faudra en effet alors diminuer beaucoup plus cette fréquence FDD pour obtenir un signal quantificateur que si on diminue d'office, dès le début de l'irradiation, le gain d'amplification GAD. Cela est illustré dans la suite sur la figure 8.

Sur la figure 7, sont représentés des diagrammes temporels des comportements simultanés des grandeurs pertinentes observées lorsqu'un générateur d'irradiation à courant continu DC est utilisé. Le profil d'émission GEN du générateur DC est représenté sur la figure 7A. On remarque, ici encore, que la fréquence FDD de lecture de la photodiode est fixée à 400 KHz et que, selon le mode de réalisation correspondant à la figure 7, c'est le gain électronique GAD qui est modifié pour modifier la résolution de la photodiode de détection DD.

Sur cette figure 7, dès lors que l'émission du générateur a été détectée, le gain GAD bascule de manière à diminuer la résolution de la photodiode de détection DD et assurer un signal de sortie NDD quantifiant, ainsi que représenté sur la figure 7E.

Le signal somme S est ici linéaire, de pente constante ainsi que représenté sur la figure 7F. Sur la figure 7, comme sur la figure 4, l'arrêt du générateur engendre l'arrêt de l'acquisition ACQ par les diodes d'acquisition DA. La détection de l'arrêt du générateur est effectuée par analyse du signal NDD, tel que représenté sur la figure 7E. L'arrêt du générateur DC est ici détecté lorsque l'énergie reçue décroit en dessous d'un plancher prédéterminé.

Enfin, il faut remarquer que les modifications de résolution de la photodiode de détection DD peuvent être réalisées, non seulement au moment du basculement vers le mode d'acquisition des diodes d'acquisition DA, mais également pendant l'acquisition ACQ par les diodes d'acquisition DA. Cela est utile quand le générateur monte davantage en intensité qu'attendu.

Cela est représenté sur la figure 8. Sur cette figure 8, on remarque que le gain GAD est égal à 2 avec une fréquence de 100 kHz. On remarque alors que la valeur 30% VSAT est doublée par rapport à l'utilisation d'un gain GAD unitaire. Aussi, pour l'émission GEN du générateur, tel qu'utilisé sur la figure 4 par exemple, on est d'autant plus sensible pour la détection de l'irradiation.

Dès que celle-ci est détectée, selon l'invention, la fréquence FDD est augmentée, ici multipliée par 4. On remarque, néanmoins, que cela ne suffit pas dès la quatrième impulsion du générateur puisque le signal NDD atteint la tension de 70% de la tension d'alimentation VAL. On note ici que, néanmoins, la diode DD ne sature pas physiquement, le signal de lecture SL restant, par ailleurs, quantificateur de l'énergie reçue grâce à la diminution de la fréquence de lecture.

Le dispositif est alors apte, grâce à l'analyse de l'énergie instantanée reçue par l'unité d'analyse ANA, de modifier encore la résolution de la photodiode de détection DD en augmentant encore la fréquence de lecture de la photodiode de détection DD, ici en la multipliant par 1,5 dès que le signal NDD atteint 70% VAL.

Avec cette nouvelle augmentation de la fréquence de lecture FDD, le signal NDD reste alors bien en-dessous de 70% de la tension d'alimentation VAL. Le signal de sortie NDD reste alors dans l'intervalle d'énergie lue sur la photodiode pouvant être amplifiée avec le gain GAD sans atteindre la tension d'alimentation VAL. Cela permet de conserver une quantification de l'énergie reçue qui permet de déterminer à quel moment l'énergie reçue correspond à l'obtention d'une image de qualité correcte.

## Revendications

1. Dispositif d'acquisition d'image (C) permettant d'obtenir une image radiologique dentaire, comprenant :
un capteur matriciel (C) intégrant :
une pluralité de photodiodes d'acquisition d'image (DA) qui sont intégrées sous forme d'une matrice, et qui sont sensibles à une irradiation ;
et au moins une photodiode de détection (DD) distincte desdites photodiodes d'acquisition d'images (DA), qui est intégrée sur la périphérie de ladite matrice du capteur matriciel, et qui est également sensible à l'irradiation ; et
un module de commande (M) du capteur (C) apte à lire périodiquement la photodiode de détection (DD) et à basculer le capteur (C) entre au moins deux modes : un mode d'attente dans lequel les photodiodes d'acquisition sont inhibées et un mode d'acquisition (ACQ) dans lequel l'énergie reçue par les photodiodes d'acquisition (DA) est utilisée pour l'acquisition d'une image, le basculement étant déclenché (SBA) dès lors que la photodiode de détection (DD) détecte une irradiation par un générateur,
**caractérisé en ce que** la photodiode de détection (DD) est apte à fournir au module de commande (M), y compris pendant l'irradiation et l'acquisition d'image par les photodiodes d'acquisition (DA), un signal de sortie (NDD) périodique de valeur représentative de l'énergie instantanée reçue et **en ce que** le module de commande (M) utilise ce signal de sortie (NDD) périodique pour analyser (ANA) l'énergie reçue pendant l'acquisition (ACQ), le module de commande (M) étant en outre apte à modifier la résolution de la photodiode de détection (DD), en fonction du signal de sortie (NDD) de la photodiode de détection (DD), afin d'assurer l'absence de saturation de la photodiode de détection (DD) lors de l'irradiation.

2. Dispositif selon la revendication 1, **caractérisé en ce que** le module de commande (M) est apte à insérer une courbe de suivi de la quantité d'énergie reçue (S) dans une zone dédiée de l'image acquise.

3. Dispositif selon l'une des revendications 1 et 2, **caractérisé en ce que**, pour modifier la résolution, le module de commande (M) est apte à augmenter la fréquence de lecture (NDD) de la photodiode de détection (DD) après détection de l'irradiation.

4. Dispositif selon l'une des revendications 1 à 3, **caractérisé en ce que** chaque signal lu sur la photodiode de détection (DD) étant amplifié au sein d'une unité de traitement (AD) selon un gain électronique (GAD) pour former le signal de sortie (NDD) du capteur (C), le module de commande (M) est apte à modifier ce gain électronique (GAD).

5. Dispositif selon l'une des revendications 1 à 4, **caractérisé en ce que** le module de commande (M) est apte à arrêter le mode d'acquisition (ACQ) dès lors qu'une chute du signal de sortie (NDD) de la photodiode de détection (DD) est observée.

6. Dispositif selon l'une des revendications 1 à 5, **caractérisé en ce que** l'analyse (ANA) de l'énergie reçue permet de calculer, pendant l'acquisition (ACQ), la quantité d'énergie reçue (S) par le capteur (C) afin de la comparer avec une quantité d'énergie optimale (SPD) à recevoir pour le capteur (C).

7. Dispositif selon la revendication 6, **caractérisé en ce que** le module de commande (M) est apte à envoyer une commande (STG) à destination d'un générateur d'irradiation (GEN) afin qu'il cesse l'irradiation dès lors que l'analyse (ANA) de l'énergie reçue (S) montre que la quantité d'énergie optimale (SPD) a été reçue.

8. Dispositif selon l'une des revendications 6 et 7, **caractérisé en ce que** le module de commande (M) est apte à arrêter le mode d'acquisition (ACQ) dès lors que l'analyse (ANA) de l'énergie reçue montre que la quantité d'énergie énergie optimale (SPD) a été reçue.

9. Procédé de commande d'un dispositif d'acquisition d'image selon l'une des revendications 1 à 8, comprenant les étapes suivantes de :
- envois périodiques (E1) de commandes de lecture de la photodiode de détection (DD) avant et pendant l'irradiation et l'acquisition (ACQ) d'image par les photodiodes d'acquisition (DA,) et
- fourniture par la photodiode de détection d'un signal de sortie (NDD) périodique de valeur représentative de l'énergie instantanée reçue, et
- réception de ce signal de sortie (NDD), et
- commande (E2) de basculement (SBA) du capteur (C) entre le mode d'attente et le mode d'acquisition (ACQ) déclenchée dès lors que la photodiode de détection détecte (E0) une irradiation par un générateur (GEN), et
- analyse (ANA) de l'énergie reçue pendant l'acquisition utilisant le signal de sortie périodique (NDD), et
- modification, par le module de commande (M) de la résolution de la photodiode de détection (DD) en fonction du signal de sortie (NDD) de la photodiode de détection (DD), afin d'assurer l'absence de saturation de la photodiode de détection (DD) lors de l'irradiation.

10. Programme d'ordinateur comportant des instructions pour l'exécution des étapes du procédé de commande selon la revendication 9 lorsque ledit programme est exécuté par un module de commande (M) ainsi qu'implémenté dans un dispositif d'acquisition d'image selon l'une des revendications 1 à 8.

11. Support d'enregistrement lisible par un ordinateur sur lequel est enregistré un programme d'ordinateur comprenant des instructions pour l'exécution des étapes du procédé de commande selon la revendication 9.

## Patentansprüche

1. Bilderfassungsvorrichtung (C), die ermöglicht, ein Zahnröntgenbild zu erhalten, umfassend:
einen Matrixsensor (C), der enthält:
eine Vielzahl von Photodioden zur Bilderfassung (DA), die in Form einer Matrix integriert sind und die gegenüber einer Strahlung empfindlich sind, und
wenigstens eine von den Bilderfassungsphotodioden (DA) getrennte Detektionsphotodiode (DD), die am Umfang der Matrix des Matrixsensors integriert ist und die ebenfalls strahlungsempfindlich ist, sowie
ein Modul zur Steuerung (M) des Sensors (C), das geeignet ist, die Detektionsphotodiode (DD) periodisch auszulesen und den Sensor (C) zwischen wenigstens zwei Modi zu kippen: einem Wartemodus, in dem die Erfassungsphotodioden gehemmt sind, und einem Erfassungsmodus (ACQ), in dem die durch die Erfassungsphotodioden (DA) aufgenommene Energie für die Erfassung eines Bildes verwendet wird, wobei das Kippen ausgelöst wird (SBA), sobald die Detektionsphotodiode (DD) eine Bestrahlung durch einen Generator erfasst,
**dadurch gekennzeichnet, dass** die Detektionsphotodiode (DD) geeignet ist, an das Steuerungsmodul (M), einschließlich während der Bestrahlung und der Bilderfassung durch die Erfassungsphotodioden (DA), ein periodisches Ausgangssignal (NDD) mit einem für die aufgenommene momentane Energie repräsentativen Wert zu liefern, und dass das Steuerungsmodul (M) dieses periodische Ausgangssignal (NDD) verwendet, um die während der Erfassung (ACQ) aufgenommene Energie zu analysieren (ANA), wobei das Steuerungsmodul (M) ferner geeignet ist, die Auflösung der Detektionsphotodiode (DD) in Abhängigkeit von dem Ausgangssignal (NDD) der Detektionsphotodiode (DD) zu ändern, um die Nichtsättigung der Detektionsphotodiode (DD) während der Bestrahlung sicherzustellen.

2. Vorrichtung nach Anspruch 1, **dadurch gekennzeichnet, dass** das Steuerungsmodul (M) geeignet ist, eine Verfolgungskurve der aufgenommenen Energiemenge (S) in einen dedizierten Bereich des erfassten Bildes einzufügen.

3. Vorrichtung nach einem der Ansprüche 1 und 2, **dadurch gekennzeichnet, dass** zur Änderung der Auflösung das Steuerungsmodul (M) geeignet ist, die Auslesefrequenz (NDD) der Detektionsphotodiode (DD) nach Erfassen der Bestrahlung zu erhöhen.

4. Vorrichtung nach einem der Ansprüche 1 bis 3, **dadurch gekennzeichnet, dass**, da jedes an der Detektionsphotodiode (DD) ausgelesene Signal innerhalb einer Verarbeitungseinheit (AD) gemäß einer elektronischen Verstärkung (GAD) verstärkt wird, um das Ausgangssignal (NDD) des Sensors (C) zu bilden, das Steuerungsmodul (M) geeignet ist, diese elektronische Verstärkung (GAD) zu modifizieren.

5. Vorrichtung nach einem der Ansprüche 1 bis 4, **dadurch gekennzeichnet, dass** das Steuerungsmodul (M) geeignet ist, den Erfassungsmodus (ACQ) zu stoppen, sobald ein Abfall des Ausgangssignals (NDD) der Detektionsphotodiode (DD) festgestellt wird.

6. Vorrichtung nach einem der Ansprüche 1 bis 5, **dadurch gekennzeichnet, dass** die Analyse (ANA) der aufgenommenen Energie ermöglicht, während der Erfassung (ACQ) die durch den Sensor (C) aufgenommene Energiemenge (S) zu berechnen, um sie mit einer aufzunehmenden optimalen Energiemenge (SPD) für den Sensor (C) zu vergleichen.

7. Vorrichtung nach Anspruch 6, **dadurch gekennzeichnet, dass** das Steuerungsmodul (M) geeignet ist, einen Befehl (STG) an einen Bestrahlungsgenerator (GEN) zu senden, damit er die Bestrahlung einstellt, sobald die Analyse (ANA) der aufgenommenen Energie (S) zeigt, dass die optimale Energiemenge (SPD) aufgenommen worden ist.

8. Vorrichtung nach einem der Ansprüche 6 und 7, **dadurch gekennzeichnet, dass** das Steuerungsmodul (M) geeignet ist, den Erfassungsmodus (ACQ) zu stoppen, sobald die Analyse (ANA) der aufgenommenen Energie zeigt, dass die optimale Energiemenge (SPD) aufgenommen worden ist.

9. Verfahren zur Steuerung einer Bilderfassungsvorrichtung nach einem der Ansprüche 1 bis 8, umfassend die folgenden Schritte:
- des periodischen Sendens (E1) von Befehlen zum Auslesen der Detektionsphotodiode (DD) vor und während der Bestrahlung und der Bilderfassung (ACQ) durch die Erfassungsphotodioden (DA), und
- der Lieferung eines periodischen Ausgangssignals (NDD) mit einem für die aufgenommene momentane Energie repräsentativen Wert durch die Detektionsphotodiode, und
- des Empfangs dieses Ausgangssignals (NDD), sowie
- der Steuerung (E2) eines Kippens (SBA) des Sensors (C) zwischen dem Wartemodus und dem Erfassungsmodus (ACQ), die ausgelöst wird, sobald die Detektionsphotodiode eine Bestrahlung durch einen Generator (GEN) detektiert (E0), und
- der Analyse (ANA) der während der Erfassung aufgenommenen Energie, die das periodische Ausgangssignal (NDD) verwendet, und
- der Änderungen der Auflösung der Detektionsphotodiode (DD) durch das Steuerungsmodul (M), in Abhängigkeit von dem Ausgangssignal (NDD) der Detektionsphotodiode (DD), um die Nichtsättigung der Detektionsphotodiode (DD) während der Bestrahlung sicherzustellen.

10. Computerprogramm, umfassend Befehle für die Durchführung der Schritte des Steuerungsverfahrens nach Anspruch 9, wenn das Programm durch ein Steuerungsmodul (M), so wie es in eine Bilderfassungsvorrichtung nach einem der Ansprüche 1 bis 8 implementiert ist, ausgeführt wird.

11. Computerlesbarer Speicherträger, auf dem ein Computerprogramm, welches Befehle für die Durchführung der Schritte des Steuerungsverfahrens umfasst, gemäß Anspruch 9 gespeichert ist.

## Claims

1. An image acquisition device (C) enabling a dental radiological image to be obtained, the device comprising :
a matrix sensor (C) integrating :
a plurality of image acquisition photodiodes (DA) that are integrated in the form of a matrix and are sensitive to radiation; and
at least one detection photodiode (DD) that is distinct from the image acquisition photodiodes, integrated at the periphery of the matrix of the matrix sensor, and likewise sensitive to radiation; and
a control module (M) of the sensor (C) adapted to periodically read the detection photodiode (DD) and to cause the sensor (C) to switch between at least two modes: a standby mode in which the acquisition photodiodes are inhibited; and an acquisition mode (ACQ) in which the energy received by the acquisition photodiodes (DA) is used for the acquisition of an image; the switch being triggered (SBA) as soon as the detection photodiode (DD) detects radiation from a generator,
**characterized in that** the detection photodiode (DD) is suitable for supplying a periodic output signal (NDD) to the control module (M), including during irradiation and image acquisition by the acquisition photodiodes (DA), the periodic output signal (NDD) having a value that is representative of the instantaneous received energy, and **in that** the control module (M) uses this periodic output signal (NDD) to analyze (ANA) the energy received during acquisition (ACQ), the control module (M) being further suitable for modifying the resolution of the detection photodiode (DD) as a function of the output signal (NDD) of the detection photodiode (DD), in order to ensure that the detection photodiode (DD) does not saturate during the irradiation.

2. A device according to claim 1, **characterized in that** the control module (M) is suitable for inserting, in a dedicated zone of the acquired image, a curve tracking the quantity of energy received (S).

3. A device according to one of claims 1 and 2, **characterized in that**, to modify the resolution, the control module (M) is suitable for increasing the read frequency (NDD) of the detection photodiode (DD) after radiation has been detected.

4. A device according to one of claims 1 to 3, **characterized in that** each signal read from the detection photodiode (DD) is amplified within a processing unit (AD) by an electronic gain (GAD) to form the output signal (NDD) from the sensor (C), the control module (M) being suitable for modifying this electronic gain (GAD).

5. A device according to one of claims 1 to 4, **characterized in that** the control module (M) is suitable for stopping the acquisition mode (ACQ) as soon as a drop is observed in the output signal (NDD) from the detection photodiode (DD).

6. A device according to one of claims 1 to 5, **characterized in that** the analysis (ANA) of the received energy makes it possible, during the acquisition (ACQ), to calculate the quantity of energy received (S) by the sensor (C) so as to compare it with an optimum quantity (SPD) of energy to be received by the sensor (C).

7. A device according to claim 6, **characterized in that** the control module (M) is suitable for sending a command (STG) to an irradiation generator (GEN) so that it stops irradiating as soon as the analysis (ANA) of the received energy (S) shows that the optimum quantity (SPD) of energy has been received.

8. A device according to one of claims 6 and 7, **characterized in that** the control module (M) is suitable for stopping the acquisition mode (ACQ) as soon as the analysis (ANA) of the received energy shows that the optimum quantity (SPD) of energy has been received.

9. A method of controlling an image acquisition device according to one of claims 1 to 8, comprising the steps of:
- periodic sending (E1) of read commands of the detection photodiode (DD) before and during irradiation and image acquisition (ACQ) by the acquisition photodiodes (DA), and
- providing, by the detection photodiode, a periodic output signal (NDD) of a value that is representative of the instantaneous received energy, and
- receiving the output signal (NDD), and
- commanding (E2) the sensor (C) to switch (SBA) between the standby mode and the acquisition mode (ACQ), the switch being triggered when the detection photodiode detects (E0) irradiation from a generator (GEN), and
- analyzing (ANA) the energy received during acquisition by using the periodic output signal (NDD), and
- modifying, by the control module (M), the resolution of the detection photodiode (DD) as a function of the output signal (NDD) of the detection photodiode (DD), in order to ensure that the detection photodiode (DD) does not saturate during the irradiation.

10. A computer program including instructions for executing steps of the control method of claim 9 when said program is executed by a control module (M) as well as implemented in an image acquisition device according to any one of claims 1 to 8.

11. A computer-readable recording medium having recorded thereon a computer program including instructions for executing steps of the control method according to claim 9.
